# EUROPÄISCHE PATENTANMELDUNG

(11) **EP 0 935 150 A1**
(43) Veröffentlichungstag der Anmeldung: **11.08.1999**
(21) Anmeldenummer: 98123651.6
(22) Anmeldetag: 10.12.1998
(51) Int. Cl.: G02B 13/00, G02F 1/33, G02B 27/00, H04N 1/31

(54) **Vorrichtung zum Ablenken, ihre Verwendung sowie ein Videosystem**

(30) Priorität: 09.02.1998 DE 19805111
(71) Anmelder: LDT GmbH & Co. Laser-Display-Technologie KG, 07548 Gera (DE)
(72) Erfinder: Deter, Christhard, 07546 Gera (DE)
(74) Vertreter: Geyer, Werner, Dr.-Ing.

(57) **Zusammenfassung**

Bei einer Vorrichtung zum Ablenken eines mittels einer Lichtquelle (60) erzeugten Lichtbündels (3, 4; 23), wobei diese Vorrichtung eine nichtmechanische Ablenkeinrichtung (1, 1') aufweist, in die das Lichtbündel (3, 4; 23) einfällt und unter einem anderen, durch eine Steuergröße bestimmten Winkel, der von der Wellenlänge jedes Lichtanteils im Lichtbündel (3, 4; 23) abhängt, ausfällt, ist vorgesehen, daß in Lichtfortpflanzungsrichtung hinter der nichtmechanischen Ablenkeinrichtung (1, 1') ein optisch dispersiv wirksames System (5), dessen Winkeldispersion von dem Winkel des in dieses einfallenden Lichtbündels (3, 4; 23) abhängig ist, angeordnet ist, wobei die Winkeldispersion die Wellenlängenabhängigkeit des durch die Steuergröße bestimmten Winkels der nichtmechanischen Ablenkeinrichtung (1, 1') kompensiert.

## Beschreibung

Die Erfindung bezieht sich auf eine Vorrichtung zum Ablenken eines mittels einer Lichtquelle erzeugten Lichtbündels, wobei diese Vorrichtung eine nichtmechanische Ablenkeinrichtung aufweist, in die das Lichtbündel einfällt und unter einem anderen, durch eine Steuergröße bestimmten Winkel, der von der Wellenlänge jedes Lichtanteils im Lichtbündel abhängt, ausfällt. Weiter bezieht sich die Erfindung auf eine Verwendung dieser Vorrichtung und ein Videosystem, bei dem diese Vorrichtung zur Ablenkung eingesetzt ist.

Vorrichtungen zum Ablenken eines Lichtbündels sind insbesondere von Laserdruckern bekannt. Bei Laserdruckem wie eine lichtempfindliche Trommel mit einem Lichtstrahl beschrieben, die an den derart belichteten Stellen elektrisch aufgeladen wird, so daß sich Tonermaterial an diesen Stellen anlagert, der anschließend auf Papier übertragen wird. Der schreibende Lichtstrahl wird dazu zeilenmäßig abgelenkt. Als besonders kostengünstige Ablenkeinrichtungen haben sich für diesen Zweck elektro-optische und akusto-optische Ablenkeinrichtungen bewährt, die auch hohe Ablenkfrequenzen bis in den Gigahertzbereich ermöglichen.

In der Videotechnik wird zur Darstellung von farbigen Videobildern, wie es beispielsweise aus der DE 43 24 849 C2 bekannt ist, ebenfalls ein Lichtbündel, allerdings in zwei Richtungen, abgelenkt. Das abgelenkte Lichtbündel beleuchtet dabei die einzelnen Bildpunkte des darzustellenden Videobildes auf einem Schirm sequentiell.

Um farbige Videobilder darzustellen, wird das Laserlichtbündel üblicherweise aus drei Lichtbündeln mit jeweils unterschiedlicher Farbe zusammengesetzt. Dieses zusammengesetzte Lichtbündel kann jedoch nicht, wie aus der Drucktechnik bekannt, ohne weiteres durch einen akusto-optischen Deflektor abgelenkt werden, da dessen Ablenkwinkel wellenlängenabhängig ist, was eine Farbzerlegung des Gesamtlichtbündels zur Folge hat.

Deswegen verwendet man in der Videotechnik im allgemeinen mechanische Ablenksysteme. Dabei wird die Zeilenablenkung, für die vor allen Dingen hohe Ablenkfrequenzen erforderlich sind, üblicherweise mit einem Polygonspiegel durchgeführt, der verschiedene, als Seiten eines Polygons angeordnete Spiegelflächen aufweist und der bei Rotationsfrequenzen im Kilohertzbereich betrieben wird. Bei 25 Spiegelfacetten und einer Drehfrequenz des Polygonspiegels von 1,3 kHz erhält man eine horizontale Ablenkfrequenz von 32,5 kHz.

Es ist technisch aufwendig, Polygonspiegel mit hohen Drehzahlen und der geforderten Präzision bei gleichzeitig hoher Zuverlässigkeit und langer Lebensdauer zu schaffen. Im allgemeinen sind die Kosten derartiger Spiegel sehr hoch, und sie sind deshalb für die Massenproduktion wenig geeignet.

Ein weiterer prinzipieller Nachteil besteht in der begrenzten Ablenkgeschwindigkeit. Die technische Grenze liegt momentan bei ungefähr 32 kHz Ablenkfrequenz. Für Anwendungsgebiete in der genannten Videotechnik, beim Einsatz für CAD bei Simulatoren oder auch beim elektronischem Kino ist ein Vielfaches dieser Ablenkgeschwindigkeit erforderlich. Solche Systeme sind nur mit hohem technischem Aufwand realisierbar, und es ist zu erwarten, daß sich die Kosten dafür gegenüber herkömmlichen Polygonspiegeln vervielfachen.

Dagegen sind nichtmechanische Ablenkeinrichtungen, die sich beispielsweise elektronische, magnetische oder akusto-optische Effekte zunutze machen, oder auch virtuelle Gitter gemäß DE 44 04 118 C2 außerordentlich kostengünstig. Sie sind aber wegen ihrer Dispersion, d.h. der Abhängigkeit des Ablenkwinkels von der Wellenlänge des Lichtbündels, für die Abbildung von Farbbildern im allgemeinen nicht geeignet. Zu den verschiedenen Möglichkeiten nichtmechanischer Ablenkeinrichtung sei hier beispielhaft auf das Buch "Der Laser in der Druckindustrie", W. Hülsbusch, Konstanz, Verlag W. Hülsbusch, 1990; Kapitel 2.3, verwiesen.

Allerdings wird in der US 5,523,073 vorgeschlagen, zur Erzeugung verschiedenfarbiger Lichtbündel, die zu einem Gesamtlichtbündel zusammengefaßt werden, gepulste Laser zu verwenden, deren Lichtpulse nacheinander durch einen als Ablenkeinrichtung eingesetzten akusto-optischen Deflektor hindurchlaufen, der dann mit unterschiedlichen Schallfrequenzen als Steuergröße für den jeweils im Deflektor befindlichen Lichtpuls beaufschlagt wird.

Die Schaltgeschwindigkeit solcher akusto-optischer Deflektoren hängt aber von der Schallgeschwindigkeit im akusto-optisch wirkenden Material und dem Durchmesser des Lichtbündels ab. Wegen der Begrenzung durch die Schallgeschwindigkeit erreicht man bei schnellem Umschalten von einer Farbe zur anderen, bei gleichem Ablenkwinkel für die verschiedenen, von der Frequenz abhängigen Steuergröße im hier verwendeten sogenannten Random Access Mode, Schaltzeiten in der Größenordnung von mehreren Mikrosekunden, eine Zeit, die für den schnellen Wechsel von Bildpunkten gemäß üblicher Videonormen nicht ausreicht.

Der Vorteil der möglichen hohen Ablenkgeschwindigkeit von akusto-optischen Deflektoren bei gleichförmiger Ablenkung läßt sich deshalb nicht ausnutzen, so daß man für Videosysteme der genannten Art weiter auf Polygonspiegel und Galvanometerspiegel zur Ablenkung des Lichtbündels angewiesen ist.

Aufgabe der Erfindung ist es, eine Vorrichtung zum Ablenken eines Lichtbündels zu schaffen, die es auch erlaubt, Lichtbündel mit Anteilen aus mehreren Farben abzulenken, die Polygonspiegeln aber bezüglich Kosten und Schnelligkeit überlegen sind.

Die Aufgabe wird ausgehend vom eingangs genannten Stand der Technik dadurch gelöst, daß in Lichtfortpflanzungsrichtung hinter der nichtmechanischen Ablenkeinrichtung ein optisch dispersiv wirksames System, dessen Winkeldispersion von dem Winkel des in dieses einfallenden Lichtbündels abhängig ist, vorgesehen ist, wobei die Winkeldispersion die Wellenlängenabhängigkeit des durch die Steuergröße bestimmten Winkels der nichtmechanischen Ablenkeinrichtung kompensiert.

Unerwarteterweise lassen sich also doch nichtmechanische Ablenkeinrichtungen, wie akusto-optische Deflektoren oder auf elektro-optischen oder magneto-optischen Effekten beruhende Ablenkeinrichtungen sowie virtuelle Gitter, für den Zweck der Ablenkung eines aus mehreren Wellenlängen bestehenden Gesamtlichtbündels einsetzen. Dazu wird hinter der Ablenkeinrichtung ein optisch dispersiv wirksames System angeordnet. Dieses System wird auf diejenige Winkeldispersion, die bei der eingesetzten nichtmechanischen Ablenkeinrichtung auftritt, ausgelegt und zwar mit umgekehrten Vorzeichen des Dispersionswinkels, wodurch sich die Winkeldispersion der Ablenkeinrichtung und die des dispersiv wirksamen Systems kompensieren.

Dispersiv wirksame Systeme sind seit langem bekannt, allerdings immer nur im Zusammenhang mit einer klassischen optischen Abbildung. Die Achromasierbedingung wird nur in der konkreten Bildebene erreicht.

Beispielsweise weist ein Prisma oder eine Linse aufgrund des verwendeten Glases im allgemeinen eine Dispersion auf. Man kann deshalb das erfindungsgemäß eingesetzte dispersiv wirksame System beispielsweise mittels eines Glaskörpers durch Formgebung und Glasauswahl so ausbilden, daß die Winkeldispersion für jeden Auftreffwinkel des nichtmechanischen Ablenksystems kompensiert ist.

Die Berechnung solcher klassischen optisch dispersiv wirksamer Systeme ist bekannt. Beispielsweise sind Systeme mit Linsen, deren Dispersionswirkungen sich gegenseitig aufheben und die mit geeigneten Optikrechenprogrammen bestimmt werden können, bei fotografischen Objektiven bekannt. Derartige Objektive enthalten Achromate oder Apechromate, je nachdem, auf wie viele Wellenlängen die Dispersion kompensiert werden soll. Dabei besteht jedoch nicht die Möglichkeit, die Achromasierbedingungen bildseitig sowohl im Fern- als auch im Nahfeld zu erfüllen.

Im allgemeinen erhält man im Ausgangsstrahl, bei einer Winkelkompensation mittels eines einzigen geeignet geformten Glaskörpers für ein Licht unterschiedlicher Wellenlängen aufweisendes Eingangslichtbündel, mehrere voneinander beabstandete parallele Lichtbündel unterschiedlicher Farbe. Dies stört bei einem Videoprojektionsgerät im allgemeinen nicht, da jedes der parallel verlaufenden Lichtbündel unterschiedlicher Farbe dabei zwar auf eine andere Zeile gerichtet ist, das Bild jedoch trotzdem farbrichtig dargestellt werden kann, wenn die Intensitätsmodulation der Eingangslichtbündel der einzelnen Farbanteile auf die jeweils zu schreibende Zeile ausgelegt wird. Allerdings müssen dann in einem Videoprojektionsgerät am oberen und unteren Bildrand zusätzliche Zeilen vorgesehen werden.

Bei einer vorzugsweisen Weiterbildung ist vorgesehen, daß die Lichtquelle mindestens drei Laser zum Erzeugen von mindestens drei Lichtbündeln unterschiedlicher Schwerpunktwellenlänge aufweist, die zu einem Gesamtlichtbündel zusammengefaßt sind, das aus der Lichtquelle kollinear austritt, und daß das optisch dispersiv wirksame System für ein dann von ihm ausgehendes, kollineares Gesamtlichtbündel zur Korrektur bezüglich der drei Schwerpunktwellenlängen ausgelegt ist.

Wenn hier der Ausdruck kollinear genannt ist, ist jedoch keine exakte geometrische Kollinearität gemeint. Es reicht für die hier interessierende, geforderte Kollinearität eine Übereinstimmung der Auftreffpunkte am Bildschirm innerhalb einer Bildpunktgröße bzw. innerhalb des Strahldurchmessers eines Lichtbündels gegebener Farbe.

Jede Lichtquelle, auch ein Laser, weist immer ein Spektrum, also eine Verteilung der verschiedenen vorkommenden Wellenlängen, auf. Als Schwerpunktwellenlänge wird die mittlere Wellenlänge der Verteilung definiert.

Gemäß der Weiterbildung ist das ausgehende Lichtbündel wie auch das Eingangslichtbündel kollinear. Dies erreicht man durch die spezielle Auslegung des optisch dispersiv wirksamen Systems, beispielsweise mit Hilfe von Optikrechenprogrammen. Die Vorrichtung gemäß der Weiterbildung ermöglicht dann, daß jeder Bildpunkt eines Videobildes bezüglich Farbe und Intensität gleichzeitig angesteuert wird.

Weiter ist das dispersiv wirkende optische System bezüglich seiner Wellenlängen auf drei Laser zur Bilderzeugung korrigiert, so daß optimale Überdeckungen im Winkel und Lage für die Bilddarstellung möglich sind.

Es hat sich zwar gezeigt, daß auch bei einer Auslegung des optisch dispersiv wirksamen Systems auf nur zwei extreme Wellenlängen gute Farbvideobilder darstellbar sind, da kleine Farbverschiebungen aufgrund der Auflösung des Auges kaum erfaßt werden. Die Auslegung auf drei Schwerpunktwellenlängen ergibt jedoch vorteilhafterweise eine so gute Auflösung, daß auch nahe am Bildschirm ein qualitativ hochwertiges Fernsehbild erfaßbar ist.

Neben anderen Möglichkeiten, von denen einige in späteren Ausführungsbeispielen dargestellt werden, läßt sich ein derartiges optisch dispersiv wirksames System gemäß einer Weiterbildung der Erfindung vorteilhafterweise so ausbilden, daß ein Linsensystem mit eingangsseitigem und ausgangsseitigem Brennpunkt vorgesehen ist, daß ein den eingangsseitigen Brennpunkt durchlaufendes Lichtbündel auch durch den ausgangsseitigen Brennpunkt läuft, und daß der eingangsseitige Brennpunkt im Ablenkpunkt der nichtmechanischen Ablenkeinrichtung liegt, wobei mindestens zwei Lichtbündel unterschiedlicher Wellenlängen in einem gleichen, von der Steuergröße abhängigen Ort des letzten Linsensystems aus dem Linsensystem austreten.

Die genannten optisch dispersiv wirksamen Systeme lassen sich zwar auch durch andere Bauelemente als Linsen ausführen, es hat sich jedoch gezeigt, daß die genannte Ausbildung als Linsensystem besonders einfach durchzuführen ist. Die Vereinfachung ist vor allem darauf zurückzuführen, daß man mit herkömmlichen Optikprogrammen unter Berücksichtigung der angegebenen Farbkorrektur, der Lage der Brennpunkte sowie dem Ort auf dem letzten Linsenscheitel ein derartiges dispersiv wirksames optisches System in bekannter Weise auslegen kann. Ferner können gemäß dieser Weiterbildung im Gegensatz zu anderen Möglichkeiten, die zum Beispiel ein zweites dispersives Ablenksystem für die Kompensation der Winkeldispersion einsetzen, beispielsweise elektronische Komponenten zur Ansteuerung des kompensierenden dispersiv wirkenden optischen Systems, wie es bei einem später folgenden Ausführungsbeispiel nötig ist, entfallen.

Die Ablenkwinkel nichtmechanischer Ablenkeinrichtungen liegen allerdings üblicherweise im Milliradbereich. Ein derartige geringer Ablenkwinkel ist für ein Videobild im allgemeinen unzweckmäßig, da man dann für eine geeignete Bildgröße einen sehr großen Abstand zwischen dem Laserprojektor und dem Bildschirm vorsehen müßte. Zur Verringerung des dann erforderlichen großen Abstands zwischen Projektor und Schirm sind in der Literatur Spiegelsysteme oder auch spezielle Aufweitungsoptiken vorgeschlagen worden.

Gemäß einer bevorzugten Weiterbildung der Erfindung läßt sich der Ablenkwinkel aber auch dadurch vergrößern, daß das Linsensystem selbst für eine Vergrößerung des Ablenkwinkels ausgelegt ist.

Auch bezüglich dieser Weiterbildung kann man mit Optikrechenprogrammen eine entsprechende Optik entwerfen, die sowohl die entsprechende Dispersion kompensiert als auch eine Vergrößerung des Ablenkwinkels erzeugt. Im allgemeinen werden aufgrund dieser Weiterbildung optische Bauelemente eingespart, so daß sich die Kosten für das beispielhaft genannte Videosystem verringern.

Setzt man die Priorität dagegen nicht auf eine Verringerung der Kosten durch ein sowohl zur Kompensation als auch zur Aufweitung geeignetes System, sondern auf eine Kostensenkung durch eine Standardisierung von Bauelementen für verschiedene Anwendungen, dann läßt sich das sowohl kompensierende als auch vergrößernde Linsensystem gemäß einer vorzugsweisen Weiterbildung der Erfindung auch aus einer Kompensationsoptik und einer dieser nachgeordneten, gegen Farbfehler korrigierten Aufweitungsoptik ausbilden.

Hier erfolgt eine funktionelle Trennung, indem sowohl eine Kompensationsoptik zur Kompensation der winkelabhängigen Dispersion als auch eine Aufweitungsoptik zur Vergrößerung des Ablenkwinkels vorgesehen werden. Dann kann man beispielsweise ein und dieselbe Kompensationsoptik beibehalten, wenn die erreichbare Winkelaufweitung aufgrund von anderen Projektionsbedingungen mittels Austausch der Aufweitungsoptik geändert werden soll. Diese Weiterbildung erlaubt ferner, ein Variosystem für die der Kompensationsoptik nachfolgende Aufweitungsoptik zum Einsatz eines Videosystems bei unterschiedlichsten Projektionsbedingungen zu verwenden.

Gemäß einer anderen bevorzugten Weiterbildung ist die nichtmechanische Ablenkeinrichtung ein akusto-optischer Deflektor. Ein akusto-optischer Deflektor unterscheidet sich von anderen, beispielsweise magneto-optischen oder elektro-optischen Ablenkeinrichtungen vor allem durch den niedrigen Preis und den geringeren erforderlichen Steueraufwand, da seine Steuerspannungen im Niedervoltbereich liegen.

Derartige akusto-optische Deflektoren arbeiten nach folgendem Prinzip: In ein Material wird eine Schallwelle eingebracht, deren Dichteschwankungen im Material zu Brechungsindexänderungen führen, die wiederum für einen durchgehenden Lichtstrahl als Beugungsgitter wirken, so daß in Abnängigkeit der Wellenlänge der Schallwelle eine Winkelablenkung durch Beugung stattfindet. Derartige akusto-optische Deflektoren können unterschiedlich aufgebaut sein, wobei verschiedene Beugungsbedingungen ausgenützt werden. Bei einer möglichen Aufbauweise, der der sogenannten Braggzelle, wird das abgelenkte Lichtbündel in einem zum Quadranten der Einkopplung benachbarten Quadranten nahezu unter dem gleichen Winkel ausgekoppelt wie der, mit dem es eingekoppelt wurde.

Bei einer bevorzugten Weiterbildung der Erfindung ist vorgesehen, daß der akusto-optische Deflektor eine Braggzelle ist. Bei einer Braggzelle wird nahezu die gesamte einfallende Lichtleistung in einen Strahl der ersten Beugungsordnung gebeugt, so daß über 40% der eingehenden Lichtleistung im Ausgangslichtstrahl zur Verfügung stehen können.

Bei einer besonders vorteilhaften Weiterbildung der Erfindung ist vorgesehen, daß das optisch dispersiv wirksame System einen außerhalb des Systems gelegenen ausgangsseitigen Brennpunkt aufweist, den die von der nichtmechanischen Ablenkeinrichtung abgelenkten Lichtbündel durchlaufen, und daß eine weitere Ablenkeinrichtung mit einem Ablenkpunkt in diesem Brennpunkt angeordnet ist, die in senkrechter Richtung zu der durch die Steuergröße bewirkte Ablenkung um den bestimmten Winkel ablenkt.

Mit einer derartigen Vorrichtung läßt sich ein Videosystem in besonders vorteilhafter Weise aufbauen. Bei herkömmlichen Videosystemen war nachteilig, daß durch die Ablenkung mittels eines Polygonspiegels und eines Galvanometerspiegels, die in zueinander senkrechten Richtungen ablenken, unterschiedliche Ursprungspunkte für die beiden Ablenkrichtungen vorgesehen waren. Der Nachteil wirkt sich vor allem für nachgeordnete optische Systeme, wie beispielsweise Aufweitungsoptiken, aus, da für diese dann eine räumlich weit ausgedehnte Eintrittspupille verlangt ist, die Schwierigkeiten bei der Optimierung der Aufweitungsoptik verursacht.

Dadurch, daß die weitere Ablenkeinrichtung gemäß der Weiterbildung am Brennpunkt des dispersiv wirksamen Systems angeordnet ist, wird das Lichtbündel von der nichtmechanischen Ablenkeinrichtung von demselben Punkt aus abgelenkt, der dann als Eintrittspupille für eine nachfolgende Aufweitungsoptik verwendet werden kann. Das optisch dispersiv wirksame System wirkt dabei zusätzlich zu seinen Kompensationseigenschaften in Art eines Relais-Linsensystems zur Verschiebung des Ablenkpunktes.

Als weitere Ablenkeinrichtung kann die erfindungsgemäße Vorrichtung mit nichtmechanischer Ablenkeinrichtung und nachgeschaltetem optisch dispersiv wirksamem System eingesetzt werden. Dies wäre vor allen Dingen für Videobilder günstig, die eine besonders schnelle Zeilenrasterung erfordern. Bei relativ niedrigen Zeilenfrequenzen gemäß üblicher Fernsehnormen ist aus Kostengründen gemäß einer bevorzugten Weiterbildung der Erfindung ein bewegter Spiegel als weitere Ablenkeinrichtung vorgesehen. Dafür ist beispielsweise ein einfacher Galvanometerspiegel mit sägezahnartiger Ansteuerung geeignet.

Wie bei einigen später beschriebenen Ausführungsbeispielen gezeigt werden wird, kann man auch zwei erfindungsgemäße Vorrichtungen für die beiden senkrechten Ablenkungen in einem Videoprojektionssystem verwenden. Dann wird man jedoch auf eine Aufweitungsoptik zwischen den nichtmechanischen Ablenkeinrichtungen verzichten und gemäß einer bevorzugten Weiterbildung der Erfindung nur der zweiten Ablenkeinrichtung eine Aufweitungsoptik nachordnen.

Eine besonders günstige Ablenkeinrichtung für zwei Richtungen, wie sie beispielsweise für Videogeräte erforderlich ist, ist gemäß einer vorteilhaften Weiterbildung dadurch gekennzeichnet, daß die nichtmechanische Ablenkeinrichtung ein einziger akusto-optischer Deflektor ist, der in zwei zueinander orthogonalen Richtungen mit Schallwellen zur Ablenkung in zwei Richtungen beaufschlagt ist.

Hierbei ist der Aufwand minimal, da nur ein einziges optisch dispersiv wirksames System und ein einziger akusto-optischer Deflektor verwendet werden müssen.

Wie aus dem Vorhergehenden schon deutlich wurde, betrifft die Erfindung vor allen Dingen auch eine Verwendung einer Vorrichtung zum Ablenken in der genannten Art bzw. ihrer Weiterbildungen in einem Videosystem, mit dem ein Videobild durch sequentielles Ausleuchten von Bildpunkten mittels eines abgelenkten Laserlichtbündels dargestellt wird.

In einem Videosystem kann aber die Intensität bei nichtmechanischen Ablenkeinrichtungen, zum Beispiel akusto-optischen Deflektoren, in Abhängigkeit des Ablenkwinkels variieren, also eine ablenkwinkelabhängige Intensitätsdämpfung auftreten. Diese wird bei einem Videosystem gemäß einer vorteilhaften Weiterbildung der Erfindung besonders günstig dadurch ausgeglichen, daß die Lichtquelle an eine Steuereinrichtung angeschlossen ist, mit der die Lichtquelle zu jedem Zeitpunkt bezüglich intensität und Farbe jedes Bildpunktes angesteuert ist, und daß dieser Steuereinrichtung zur Steuerung des Ablenkwinkels Signale in Abhängigkeit von der Steuergröße zugeführt sind, die von der Steuereinrichtung bei ablenkwinkelabhängiger Intensitätsdämpfung durch die nichtmechanische Ablenkeinrichtung zur farb- und intensitätsrichtigen Aussteuerung jedes Bildpunktes für eine Kompensation dieser Dämpfung berücksichtigt sind.

Diese Lösung zeichnet sich durch besondere Einfachheit aus, da dieselbe Steuereinrichtung für Intensität und Farbe, die bei einem Videosystem sowieso eingesetzt ist, verwendet wird. Dabei ist vorgesehen, daß die Steuereinrichtung gemäß der Weiterbildung auch Signale berücksichtigt, welche die Ablenkung steuern. Die Signale können beispielsweise mit einer nichtlinearen Kennlinie verzerrt werden oder digital über ein ROM gewandelt werden, so daß neue Signale entstehen, die der Dämpfung entgegenwirken. Bei analogen Signalen kann man durch einen Multiplikationsschaltkreis bekannter Art, bei digitalen Signalen durch Multiplikationen in einem Signalprozessor, die Signale zur Kompensation der ablenkwinkelabhängigen Dämpfung der Farbe und Intensität aufgrund von Multiplikation mit den üblichen Modulationssignalen verwerten.

Die Erfindung wird nachfolgend noch anhand von Ausführungsbeispielen in Verbindung mit der Zeichnung näher beschrieben. Es zeigen
- Figur 1: eine schematische Darstellung zur Veranschaulichung des Prinzips der Kompensation der Dispersion einer nichtmechanischen Ablenkeinrichtung mit einem optisch dispersiv wirkenden optischen System;
- Figur 2: ein Ausführungsbeispiel ähnlich wie das von Figur 1 zum Erzeugen eines ausfallenden verschiedenfarbigen parallelen Lichtbündels;
- Figur 3: ein Ausführungsbeispiel mit einem schematisch dargestellten Linsensystem als dispersiv wirkendes optisches System;
- Figur 4: eine Ablenkeinrichtung zum Ablenken in zwei orthogonalen Richtungen;
- Figur 5: ein Videosystem, bei dem die Einrichtung von Figur 3 zur Ablenkung eingesetzt ist;
- Figur 6: eine Kompensationsoptik, die bezüglich dreier Laserwellenlängen optimiert ist und die bei den Ausführungsbeispielen von Fig. 3 bis Fig. 5 eingesetzt wurde.

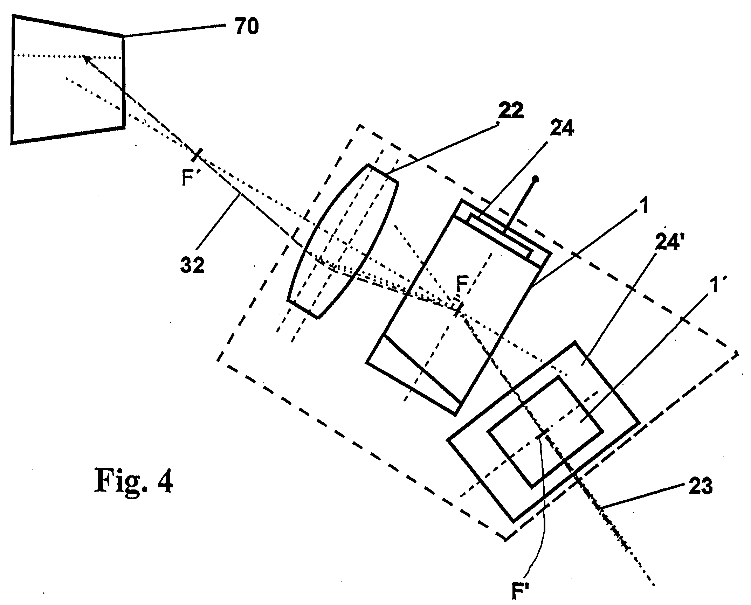

Bei den folgenden Ausführungsbeispielen sind als nichtmechanische Ablenkeinrichtungen im allgemeinen akusto-optische Deflektoren 1 eingesetzt worden, obwohl auch andere nichtmechanische Ablenkeinrichtungen, wie elekto-optische oder magneto-optische Ablenkeinrichtungen, verwendet werden können. Akusto-optische Deflektoren werden hier nur deshalb bevorzugt dargestellt, weil sie kostengünstig erhältlich und technisch ausgereift sind. Insbesondere wurde für die Ausführungsbeispiele ein akusto-optischer Deflektor AA. DP-150 der Firma AA s.a., 6-8, Rue de Versailles, F-7870 Saint-Remy-les-Chevreuse ausgewählt. Für eine Ablenkung in zwei Richtungen gemäß Fig. 4 wurde außerdem der Typ AA. DTS-XY/250 von der gleichen Firma eingesetzt.

Diese akusto-optischen Deflektoren sind für eine Ablenkung im Wellenbereich von 0,488 bis 0,633 µm optimiert und wurden für Braggbedingungen bei der Ablenkung mit einer Frequenz von 135 MHz für den Ausgangsablenkwinkel Null betrieben. Die Modulationsbandbreite für die Ablenkung war dabei ± 24 MHz. Bei einer Laserwellenlänge von 633 nm konnte damit ein maximaler Ablenkwinkel von 48 Millirad erreicht werden.

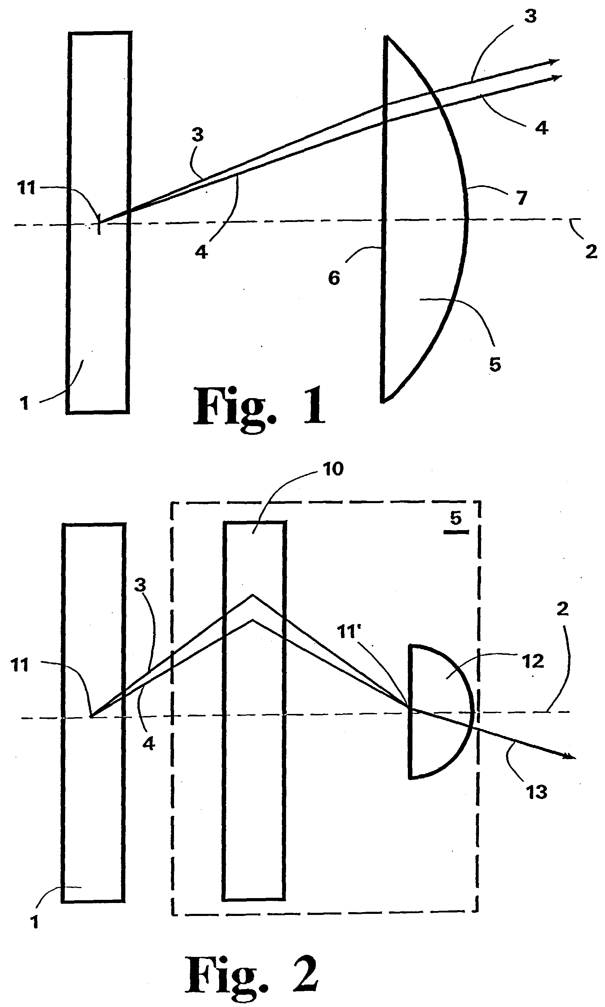

Zur Wirkungsweise von akusto-optischen Deflektoren wird auf die einschlägige Literatur verwiesen. Wichtig ist hier allein, daß zum Einstellen eines bestimmten Ablenkwinkels eine Schallwelle in das Material eingebracht wird, deren Wellenlänge den Ablenkwinkel bestimmt. Dabei wird Licht mit kürzerer Wellenlänge weniger stark abgelenkt als Licht mit längerer Wellenlänge. In Fig. 1 sind dafür ein blaues und ein rotes Lichtbündel 3 und 4 eingezeichnet, wobei das blaue Lichtbündel 4 die kürzere Wellenlänge hat und weniger stark abgelenkt wird.

Zur Kompensation der unterschiedlichen Ablenkwinkel ist dem akusto-optischen Deflektor 1 ein dispersiv wirkendes optisches System 5 nachgeordnet, das die Lichtbündel 3 und 4 parallelisiert, weil das Material des Systems 5 einen höheren Brechungsindex für blaue Lichtbündel 4 als für rote Lichtbündel 3 aufweist. Neben dem Brechungsindex hängt die Wirkung des optischen Systems 5 auch stark von der Form der Flächen 6 und 7 ab, die gemäß bekannten Rechenmethoden zur Parallelisierung für alle Ablenkwinkel ausgelegt werden können.

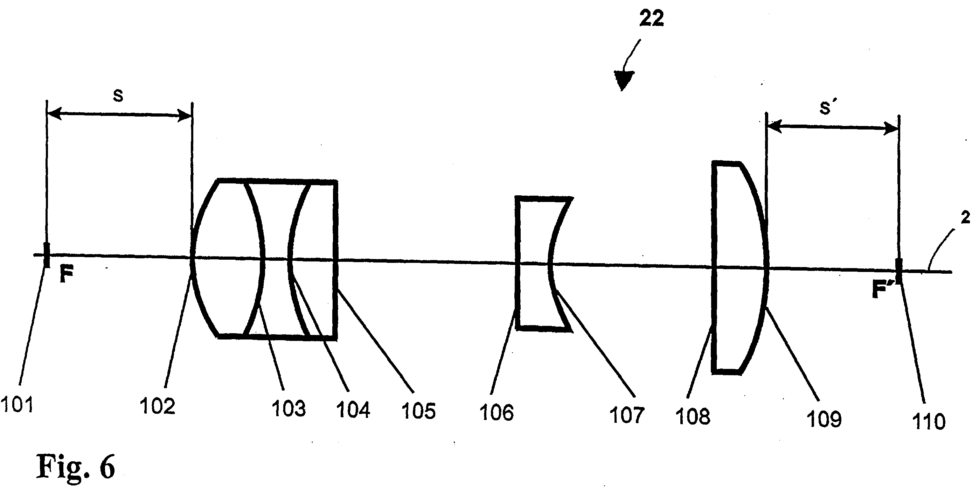

Die in Fig. 1 beispielhaft eingezeichneten Lichtbündel 3 und 4 werden in dem optischen System 5 bei der gezeigten Auslegung unter dem dargestellten Winkel dadurch parallelisiert, daß das Lichtbündel 3 an der Fläche 6 unter größerem Winkel auftrifft, jedoch schwächer gebrochen wird als das Lichtbündel 4. Aus Fig. 1 ist auch erkennbar, daß die Aufspaltung des roten und blauen Strahls bei Ablenkung durch den akusto-optischen Deflektor 1 aufgrund verschiedener Wölbungen der Flächen 6 und 7 immer geeignet kompensiert werden kann, wobei dann auch unterschiedliche Brechungen an der Fläche 7 berücksichtigt werden. Derartige Rechnungen sind aus der Optik bekannt, und es soll hier nicht näher darauf eingegangen werden. Das dargestellte Prinzip ist aber bei allen dispersiv wirksamen optischen Systemen anwendbar. Insbesondere wird diesbezüglich auf die später folgende Beschreibung der Fig. 6 hingewiesen, in der ein explizit berechnetes optisches Linsensystem angegeben ist, das vorteilhaft in Videoprojektoren einsetzbar ist.

Das Ausführungsbeispiel von Fig. 1 ist bei einer Videoprojektion mittels Lichtbündeln nicht unbedingt zweckmäßig, da es dafür vorteilhaft wäre, wenn die Lichtbündel 3 und 4 nach Verlassen des optischen Systems nicht nur parallel, sondern auch kollinear wären, damit jeder Bildpunkt gleichzeitig mit allen drei Farben ausgeleuchtet wird, wodurch dann das ausgehende Lichtbündel als gemeinsames Lichtbündel synchron und gleichmäßig über einen Bildschirm gerastert würde.

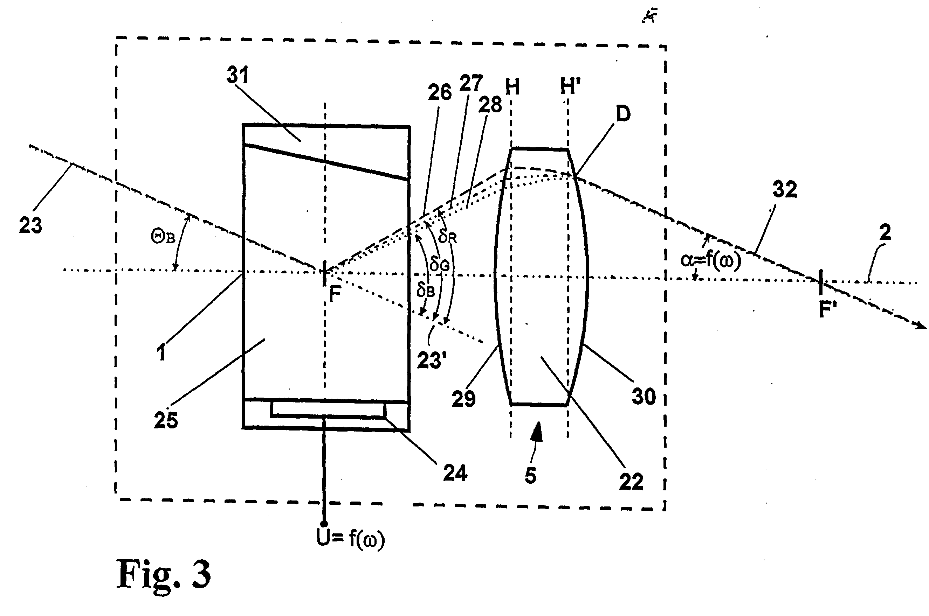

Ein Beispiel für ein derartiges dispersiv wirkendes optisches System ist in Fig. 2 schematisch gezeigt.

Gemäß Fig. 2 besteht das dispersiv wirkende optische System 5 aus einer ablenkenden Optik 10, mit der die aus der Ablenkeinrichtung 1 ausfallenden abgelenkten Lichtbündel 3 und 4, virtuell aus dem Ablenkpunkt 11 kommend, auf einen Punkt 11' zusammengeführt werden und anschließend durch einen aus einem optisch dispersiven Material bestehenden Körper 12 parallelisiert werden, so daß beide Lichtbündel 3 und 4, obwohl sie unterschiedliche Wellenlängen haben, nach Zusammenführen im Punkt 11' wieder als kollinearer Strahl 13 auslaufen.

Die ablenkende Optik 10 kann ein weiterer akusto-optischer Deflektor sein, der mit halber Schallwellenlänge wie der akusto-optische Deflektor 1 betrieben wird. Dann werden die Lichtbündel 3 und 4 bei jedem Ablenkwinkel im Punkt 11' fokussiert, der so als Spiegelbild des Ablenkpunkts 11 im akusto-optischen Deflektor 1 erscheint.

Der Körper 12 ist zum Parallelisieren ähnlich wie das dispersiv wirkende optische System 5 gemäß Fig. 1 ausgebildet.

Anstelle eines akusto-optischen Deflektors 10 kann man aufgrund der Wirkungsweise der Spiegelung der Lichtbündel 3, 4 vom Punkt 11 in den Punkt 11' zur Ausführung des Beispiels von Fig. 2 auch auf eine Relais-Optik bekannter Art zurückgreifen. Eine andere Möglichkeit besteht darin, sich die Beugung zunutze zu machen, da diese gleichwirkend mit dem beispielhaft genannten akusto-optischen Deflektor als Einrichtung 10 ist. Beispielsweise könnte die Einrichtung 10 dann ein Hologramm oder eine binäre Optik sein, bei der das Beugungsmuster zur Ablenkung abhängig von dem Auftreffort der Lichtbündel 3 und 4 auf dem Hologramm oder der binären Optik berechnet wird.

Am einfachsten läßt sich das dispersiv wirksame optische System 5 jedoch mit Standandbauelementen wie Linsen und/oder Spiegeln verwirklichen, wobei die Einrichtung 10 dann beispielsweise ein Relais-Linsensystem oder ein Spiegelsystem ist, mit dem der Ablenkpunkt 11 in den Punkt 11' abgebildet wird.

Beim Ausführungsbeispiel von Fig. 3 wird ein andersartiges dispersiv wirksames optisches System 5 verwendet, das die gleiche Eigenschaft hat wie das von Fig. 2, nämlich ein Lichtbündel 23, das aus drei Lichtbündeln der Farben rot, grün und blau kollinear und parallel vereinigt ist, nach Ablenkung über einen akusto-optischen Deflektor 1 wieder in ein kollineares und paralleles Ausgangslichtbündel 32 zu überführen.

Das Lichtbündel 23 tritt dabei gemäß Fig. 3 unter dem sogenannten Braggwinkel θ_{B} in den akusto-optischen Deflektor 1 ein. Zum Ablenken wird eine elektrische Wechselspannung an einem Piezokristall 24 angelegt, der aufgrund seiner dadurch angeregten Schwingungen eine Schallwelle in dem akusto-optischen Medium 25 erzeugt, die dann in einem Absorber 31 absorbiert wird. Die Schallwelle verursacht innerhalb des akusto-optischen Mediums 25 Verdichtungen und Verdünnungen des Mediums 25, die zu lokalen Brechungsindexänderungen führen. Das akusto-optische Medium 25 bildet aufgrund der Verdichtungen und Verdünnungen ein Beugungsgitter. Das heißt, neben einem ungebeugten Lichtbündel 23' entstehen auch gebeugte Strahlen 26, 27, 28. In der Fig. 3 sind deren Winkel δ_{B}, δ_{G} und δ_{R} für den roten, grünen und blauen Teilstrahl eingezeichnet. Wegen der Ablenkung aufgrund von Beugung ist auch verständlich, daß die Ablenkwinkel von der Wellenlänge der Lichtbündel abhängen, wobei Licht der längsten Wellenlänge (rot) der größte Ablenkwinkel und der der kürzesten Wellenlänge (blau) der kleinste Ablenkwinkel zukommt.

Weiter ist aufgrund der dargestellten Funktionsweise verständlich, daß die Ablenkwinkel δ_{B}, δ_{G} und δ_{R} durch die Wellenlänge der Schallwelle und damit durch die Frequenz ω der angelegten Zwischenspannung U bestimmt sind.

Die Kompensationsoptik 22, deren Aufbau in einer beigefügten Tabelle sowie in Fig. 6 noch näher verdeutlicht ist, ist als Linsensystem ausgeführt, das unabhängig von den im Strahl 23 gegebenen Wellenlängen die von einem Brennpunkt F ausgehenden Teilstrahlen in einen Ausgangsbrennpunkt F' überführt. Weiter ist das optische System 5 so dimensioniert, daß die in der Kompensationsoptik 22 wirksamen dispersiven Materialien die verschiedenen Teillichtbündel 26, 27, 28 zu einem auf einem letzten Linsenscheitel der Kompensationsoptik 22 liegenden Ort D leiten, der allerdings mit dem Ablenkwinkel α variiert. Dadurch wird erzwungen, daß das ausgehende Lichtbündel 32 immer kollinear und parallel ist, wenn der Brennpunkt F im Ablenkpunkt des akusto-optischen Deflektors 1 liegt.

Das Ausführungsbeispiel von Fig. 3 läßt sich wegen des ausgehenden kollinearen Lichtbündels bei Videoprojektionseinrichtungen äußerst vorteilhaft einsetzen. Mit dem Ausführungsbeispiel von Fig. 3 lassen sich allerdings nur Ablenkungen in einer Richtung erzeugen. Eine Ablenkung in zwei Richtungen, wie sie für die Darstellung von Videobildern üblicherweise eingesetzt wird, kann jedoch ebenfalls mit dem Ausführungsbeispiel von Fig. 3 erreicht werden, wenn beispielsweise senkrecht zur Zeichenebene eine weitere Schallwelle in das akusto-optisch wirksame Medium 25 für eine weitere Ablenkung eingeleitet wird. Mit der gezeigten Ansteuerung und mittels einer weiteren Wechselspannung U' mit einer anderen Frequenz kann man die Ablenkung in zwei orthogonale Richtungen steuern, wobei die Kompensationsoptik 22 als Linsensystem so ausgelegt ist, daß sie die Dispersion auch für diese Richtung durch den Deflektor 1 kompensiert.

Eine andere Möglichkeit für eine zweidimensionale Abbildung bestünde darin, zwei Ablenkeinrichtungen gemäß Fig. 3 mit zueinander senkrechten Ablenkrichtungen hintereinander anzuordnen. Dieser Aufwand wäre jedoch sehr hoch, da man sowohl zwei Kompensationsoptiken 22 als auch zwei akusto-optische Deflektoren 1 einsetzen müßte. Ein anderes Beispiel für eine zweidimensionale Ablenkeinrichtung ist in Fig. 4 gezeigt, bei der eine einzige Kompensationsoptik 22 mit zwei akusto-optischen Deflektoren 1 und 1' eingesetzt ist. Die akusto-optischen Deflektoren 1 und 1' sind dabei bezüglich ihrer Ablenkungen in senkrechter Richtung zueinander angeordnet. Weiter ist die Kompensationsoptik 22 nicht radial symmetrisch wirksam, dagegen sind deren Linsen für die Ablenkung des akusto-optischen Deflektors 1 und des akusto-optischen Deflektors 1' unterschiedlich geschliffen, damit von deren jeweiligen Ablenkpunkten F in den einzigen Fokuspunkt F' abgelenkt wird. Weiter ist in Fig. 4 ein Bildschirm 70 gezeigt, auf den das Lichtbündel 32 abgelenkt wird und auf dem durch sequentielles Beleuchten von Bildpunkten ein Videobild dargestellt wird.

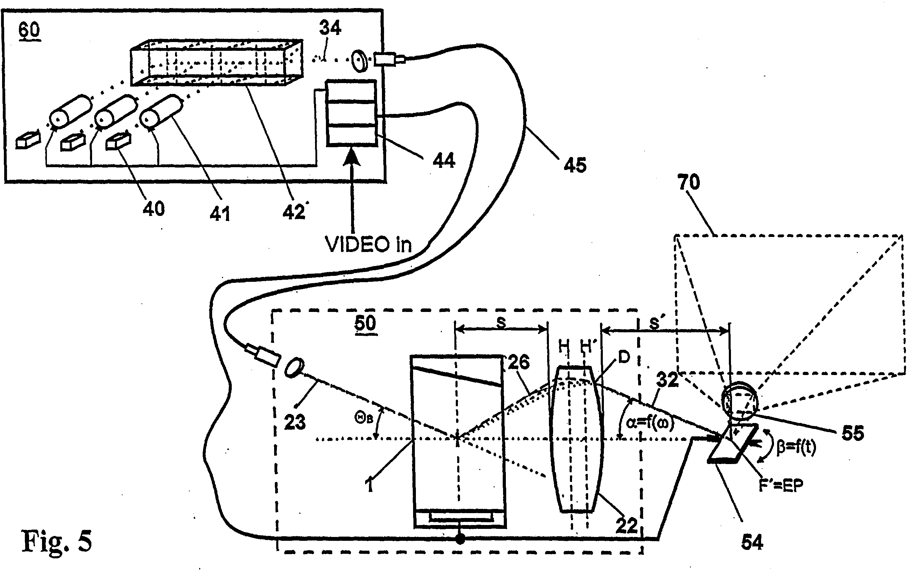

Der prinzipielle Aufbau eines Videosystems ist in Fig. 5 gezeigt. Eine Lichtquelle 60 weist dabei drei verschiedenfarbige Laser 40 auf, die mit Hilfe von Modulatoren 41 bezüglich ihrer Intensität gesteuert werden. Die drei von den Lasem 40 ausgehenden Laserlichtbündel mit den Farben Rot, Grün und Blau werden in einer Einrichtung 42 zu einem einzigen Gesamtlichtbündel 34 zusammengefaßt. Diese Einrichtung 42 bestand im Ausführungsbeispiel aus einem dichroitischen Spiegelsystem, wie es auch aus dem Stand der Technik bekannt ist.

Die Intensitäten der Laserlichtbündel mit den drei Farben Rot, Grün und Blau sowie deren Modulation wird durch elektrische Signale, die von einer Steuereinrichtung 44 aus einem Signal 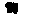 VIDEO in" erzeugt werden, gesteuert. Die Steuereinrichtung 44 versorgt auch die übrigen Einrichtungen mit den entsprechenden Signalen. So werden beispielsweise, wie an einer aus der Lichtquelle 60 herausgeführten Leitung angedeutet ist, auch die für die Ablenkung erforderlichen Signale durch diese Einrichtung 44 aus dem "VIDEO in"- Signal gewonnen. Damit kann die Steuereinrichtung 44 auch eventuelle winkelabhängige Dämpfungen der Ablenkeinrichtung 1 wie eingangs beschrieben kompensieren.

Mit einer Optik wird das aus der Einrichtung 42 austretende parallele und kollineare Gesamtlichtbündel in eine Lichtleitfaser 45 eingekoppelt und mit einer weiteren Optik als kollineares und paralleles Lichtbündel 23 wieder ausgekoppelt. Die zur Ein- und Auskopplung in die Lichtleitfaser zweckmäßigerweise benötigten Optiken sind beispielsweise in der DE 196 16 843 A1 detailliert beschrieben.

Die nachfolgende Ablenkeinrichtung 50 ist in gleicher Weise aufgebaut wie das Ausführungsbeispiel von Fig. 3. Ein wesentlicher Unterschied besteht allerdings darin, daß das Lichtbündel 32 nach Verlassen der Ablenkeinrichtung 50 auf einen Schwingspiegel 54 gerichtet wird, mit dem in diesem Ausführungsbeispiel eine Ablenkung senkrecht zur Ablenkrichtung der Ablenkeinrichtung 50 erfolgt. Während die Ablenkeinrichtung 50 das Lichtbündel 34 entlang einer Zeile eines Videobildes rastert, ist der Schwingspiegel 54 dafür vorgesehen, eine bildmäßige Rasterung senkrecht zur Zeilenrichtung zu bewirken.

Der ausgangsseitige Brennpunkt F' der Kompensationsoptik 22 liegt auf der Achse des Schwenkspiegels 54. Deswegen geht für die Projektion sowohl die Zeilenablenkung als auch die weitere Ablenkung senkrecht zur Zeile immer von einem einzigen Punkt F' des Schwenkspiegels aus.

Diese Eigenschaft bedeutet eine wesentliche Vereinfachung für eine Aufweitungsoptik 55, die nachfolgend für eine Vergrößerung des gerasterten Winkels angeordnet ist. Eine Aufweitungsoptik 55 ist beispielsweise in der DE 43 24 849 C2 erläutert, wobei auch die Problematik einer Abbildung von zwei beabstandeten Ablenkpunkten angesprochen wird. Die anhand von Fig. 3 beschriebene Kompensationsoptik 22 mit ihrer Eigenschaft, einen Ablenkpunkt F in einen anderen Punkt F' zu verschieben, der dann zweckmäßigerweise in der Eintrittpupille der Aufweitungsoptik 55 liegt, stellt einen beträchtlichen Vorteil gegenüber der aus dem Stand der Technik bekannten Auslegung der Aufweitungsoptik 55 dar, indem die Brennpunkte zweier Teillinsensysteme dann genau aufeinanderliegen können.

In Fig. 6 ist nun eine Kompensationsoptik gezeigt, die für ein Videoprojektionsgerät der genannten Art berechnet wurde, wobei die Wellenlängen der Laser 40 folgende Werte hatten: λ_{R} = 620 nm für rotes Licht, λ_{G} = 540,5 nm für grünes Licht und λ_{B} = 476 nm für blaues Licht.

Zur Dimensionierung des Ausführungsbeispiels von Fig. 6 ist eine Tabelle beigefügt, in der die Krümmungsradien der einzelnen Linsen, deren Abstände zur nächsten Fläche, die Brechzahlen und die Dispersion, die hier durch die Abbesche Zahl υ ausgedrückt ist, aufgelistet sind und die einen einfachen Nachbau einer erfindungsgemäßen Kompensationsoptik 22 für ein Videoprojektionsgerät erlaubt. Die Bezugszeichen 101 bis 110 bedeuten dabei spezielle Orte von Linsenflächen und von Brennpunkten F, F', die in der Tabelle unter der Spalte 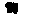 Ort" aufgeführt sind.

Dem Fachmann geläufige Abänderungen der dargestellten Ausführungsbeispiele werden hier nicht speziell erläutert. Auf die Aufweitungsoptik 55 im Ausführungsbeispiel von Fig. 5 kann man beispielsweise verzichten, wenn die Kompensationsoptik 22 nicht nur kompensierend, sondern gleichzeitig winkelvergrößernd ausgelegt ist.

Andere Änderungen gegenüber den dargestellten erfindungsgemäßen Ausführungsbeispielen sind ebenfalls möglich. So kann man beispielsweise auch ein weiteres Relais-Linsensystem zur Transformation des Brennpunktes F' auf den Schwingspiegel 55 vorsehen oder die Aufweitungsoptik 55 gleich in die Kompensationsoptik integrieren.

**TABELLE**

| Ort | Radius | Abstand | Brechzahl | Dispersion υ |
|---|---|---|---|---|
| 101 | | | | |
| | | s = 50,0 mm | 1 (Luft) | |
| 102 | 8,66 mm | | | |
| | | 2,6 mm | 1,622 | 63,2 |
| 103 | -19,69 mm | | | |
| | | 0,7 mm | 1,761 | 27,3 |
| 104 | 5,09 mm | | | |
| | | 2,5 mm | 1,622 | 63,2 |
| 105 | 58,14 mm | | | |
| | | 29,3 mm | 1 (Luft) | |
| 106 | -29,85 mm | | | |
| | | 2,5 mm | 1,4891 | 70,2 |
| 107 | 4,09 mm | | | |
| | | 8,6 mm | 1 (Luft) | |
| 108 | -3878,1 mm | | | |
| | | 2,7 mm | 1,812 | 25,2 |
| 109 | -11,36 mm | | | |
| | | s' = 53,5 mm | 1 (Luft) | |
| 110 | | | 1 (Luft) | |

## Patentansprüche

1. Vorrichtung zum Ablenken eines mittels einer Lichtquelle (60) erzeugten Lichtbündels (3, 4; 23), wobei diese Vorrichtung eine nichtmechanische Ablenkeinrichtung (1, 1') aufweist, in die das Lichtbündel (3, 4; 23) einfällt und unter einem anderen, durch eine Steuergröße bestimmten Winkel, der von der Wellenlänge jedes Lichtanteils im Lichtbündel (3, 4; 23) abhängt, ausfällt, **dadurch gekennzeichnet**, daß in Lichtfortpflanzungsrichtung hinter der nichtmechanischen Ablenkeinrichtung (1, 1') ein optisch dispersiv wirksames System (5), dessen Winkeldispersion von dem Winkel des in dieses einfallenden Lichtbündels (3, 4; 23) abhängig ist, vorgesehen ist, wobei die Winkeldispersion die Wellenlängenabhängigkeit des durch die Steuergröße bestimmten Winkels der nichtmechanischen Ablenkeinrichtung (1, 1') kompensiert.

2. Vorrichtung nach Anspruch 1, dadurch gekennzeichnet, daß die Lichtquelle (60) mindestens drei Laser (40) zum Erzeugen von mindestens drei Lichtbündeln unterschiedlicher Schwerpunktwellenlängen aufweist, die zu einem Gesamtlichtbündel (23) zusammengefaßt sind, das aus der Lichtquelle kollinear austritt, und daß das optisch dispersiv wirksame System (5) für ein dann von ihm ausgehendes, kollineares Gesamtlichtbündel (32) zur Korrektur bezüglich der drei Schwerpunktwellenlängen ausgelegt ist.

3. Vorrichtung nach Anspruch 2, dadurch gekennzeichnet, daß das optisch dispersiv wirksame System (5) ein Linsensystem (22) mit eingangsseitigem und ausgangsseitigem Brennpunkt (F, F') ist, daß ein den eingangsseitigen Brennpunkt (F) durchlaufendes Lichtbündel (26, 27, 28) auch durch den ausgangsseitigen Brennpunkt (F') läuft, und daß der eingangsseitige Brennpunkt (F) im Ablenkpunkt der nichtmechanischen Ablenkeinrichtung (1) liegt, wobei mindestens zwei Lichtbündel (26, 27, 28) unterschiedlicher Wellenlänge an einem gleichen, von der Steuergröße abhängigen Ort (D) des letzten Linsenscheitels aus dem Linsensystem (22) austreten.

4. Vorrichtung nach Anspruch 3, dadurch gekennzeichnet, daß das als optisch dispersiv wirksame System (5) eingesetzte Linsensystem für eine Vergrößerung des Ablenkwinkels ausgelegt ist.

5. Vorrichtung nach Anspruch 4, dadurch gekennzeichnet, daß das Linsensystem (22) aus einer Kompensationsoptik und einer dieser nachgeordneten, gegen Farbfehler korrigierten Aufweitungsoptik (55) ausgebildet ist.

6. Vorrichtung nach einem der Ansprüche 1 bis 5, dadurch gekennzeichnet, daß die nichtmechanische Ablenkeinrichtung (1) ein akusto-optischer Deflektor ist.

7. Vorrichtung nach Anspruch 6, dadurch gekennzeichnet, daß der akusto-optische Deflektor eine Braggzelle ist.

8. Vorrichtung nach einem der Ansprüche 1 bis 7, dadurch gekennzeichnet, daß das optisch dispersiv wirksame System (5) einen außerhalb des Systems gelegenen ausgangsseitigen Brennpunkt (F') aufweist, den die von der nichtmechanischen Ablenkeinrichtung (1) abgelenkten Lichtbündel (26, 27, 28) durchlaufen, und daß eine weitere Ablenkeinrichtung (1) mit einem Ablenkpunkt in diesem Brennpunkt angeordnet ist, die in senkrechter Richtung zu der durch die Steuergröße bewirkten Ablenkung ablenkt.

9. Vorrichtung nach Anspruch 8, dadurch gekennzeichnet, daß die weitere Ablenkeinrichtung (54) ein bewegbarer Spiegel ist.

10. Vorrichtung nach einem der Ansprüche 8 oder 9, dadurch gekennzeichnet, daß der weiteren Ablenkeinrichtung (1) eine Aufweitungsoptik (55) nachgeordnet ist.

11. Vorrichtung nach Anspruch 1, dadurch gekennzeichnet, daß die nichtmechanische Ablenkeinrichtung (1) ein einziger akusto-optischer Deflektor ist, der in zwei zueinander orthogonalen Richtungen mit Schallwellen zur Ablenkung in zwei Richtungen beaufschlagt ist.

12. Verwendung einer Vorrichtung zum Ablenken nach einem der Ansprüche 1 bis 11 in einem Videosystem, bei dem Videobilder durch sequentielles Ausleuchten von Bildpunkten mittels eines abgelenkten Laserlichtbündels (32) dargestellt werden.

13. Videosystem mit einer Vorrichtung zum Ablenken nach einem der Ansprüche 1 bis 12 zum Ablenken eines mittels einer Lichtquelle (60) erzeugten Lichtbündels zum sequentiellen Ausleuchten von Bildpunkten eines Videobildes, **dadurch gekennzeichnet,** daß die Lichtquelle (60) an eine Steuereinrichtung (44) angeschlossen ist, mit der die Lichtquelle (60) zu jedem Zeitpunkt bezüglich Intensität und Farbe jedes Bildpunktes gesteuert ist, und daß dieser Steuereinrichtung (44) zur Steuerung des Ablenkwinkels Signale in Abhängigkeit von der Steuergröße zugeführt sind, die von der Steuereinrichtung (44) bei ablenkwinkelabhängiger Intensitätsdämpfung durch die nichtmechanische Ablenkeinrichtung (1, 1') zur farb- und intensitätsrichtigen Aussteuerung jedes Bildpunktes für eine Kompensation dieser Dämpfung berücksichtigt sind.
